# EUROPEAN PATENT APPLICATION

(11) **EP 1 491 463 A2**
(43) Date of publication of application: **29.12.2004**
(21) Application number: 04013986.7
(22) Date of filing: 15.06.2004
(51) Int. Cl.: B65D 88/68, B08B 9/08, B65G 65/48

(54) **A declogging device for storage silos**

(30) Priority: 19.06.2003 IT CR20030009
(71) Applicant: C&M Manutenzioni Industriali s.n.c., 26100 Cremona (IT)
(72) Inventor: Grazioli, Christian, 26100 Cremona (IT); Sorrentino, Massimo, 26100 Cremona (IT)

(57) **Abstract**

A device for declogging storage silos of granular or powdery products, comprising a support structure (1) to be fixed on the top of a silo (S) and a work arm (2) supporting a tool (3) and connected to said structure (1) through a rotating, vertically moving spindle (4). Said work arm (2) comprises an articulated tool-carrying portion, and an extension portion made of a selected number of rods (10) with substantially rigid connections.

## Description

The present invention concerns a declogging device for storage silos, for removing cloggings caused by blocks of aggregated, compacted material.

In some industrial sectors, such as food, fodder or chemical, the clogging of silos containing granular or powdery materials or products, such as cereals, feed, bran or flour, detergents, soda, gypsum, cement and so on, is frequently experienced.

Clogging blocks of aggregated and compacted material may easily form inside the silos, due to pressure and humidity conditions, reducing the storage capacity and obstructing the discharge port. In these cases, direct human intervention is possible, but very dangerous with the risks of falls, sudden slides of the material and asphyxia.

In order to overcome this problem, a number of devices have been produced for declogging with no direct human intervention, which enable a tool, generally with rotating blades or rotating flexible bodies, to be let down into the silo for breaking up the clogging blocks of material.

These devices essentially comprise a support structure to be anchored on the top of the silo; an articulated arm connected to the structure extending downwards and entering a short way inside the silo, through a manhole; a pneumatic or hydraulic tool-carrying head, suspended from the end of the arm by a cable or by the pneumatic tube itself.

The articulated arm consists only of a first vertical rod, supported by a rotating pin, and a second rod pivoted to the first and free to incline in a vertical plane.

Inclination of the second rod is adjustable by a metal cable attached to the rod, usually halfway along its length, that is wound on a reel supported by the above frame structure. The tube that holds the tool-carrying head is connected to a winch, also supported by said frame structure.

The tool is thus positioned by rotating the articulated arm around the rotating pin, adjusting the inclination of the second rod of the arm and unwinding or rewinding the suspending tube, until the desired working depth is reached.

These devices have some disadvantages which make them not completely satisfactory.

A first disadvantage of these devices is that the tool is not rigidly supported, but is suspended from a flexible element. It therefore easily rebounds off the cloggings blocks, thus being not effective in more serious cases, when blocks are rather compact and difficult to remove.

Another disadvantage is that the tool-carrying head can twist the pneumatic tube from which it is suspended, when it collides with the blocks, causing rapid wear and risk of breaking the tube itself.

A further disadvantage, especially when working in large silos, is that the short, light and weak structure of these devices enables only small and barely effective tools to be used.

These devices are neither very practical to use, as the position of the arm and depth of the tool are adjusted manually, so that the operator has to lean through the manhole to check the position of the tool and the progress of the work.

When a silo is clogged by a very large and resistant block of material, drills are also used, before the above described devices, in order to perforate the block and create some working space for the tool. These drills generally comprise a frame which supports a rotating spindle, which is also sliding along the frame itself, into which a series of tubular elements and finally a drill bit can be inserted.

Said drills are only adapted to drill the clogging blocks, but cannot be moved laterally and therefore cannot remove incrustations from the walls; furthermore, consideration must be given to the inconvenience of using two different machines to be set up and installed on the silo.

The purpose of the invention is to eliminate or reduce these disadvantages.

The main purpose of the invention is therefore to realize a declogging device for storage silos, for removing blocks of granular or powdery material, achieving a high effectiveness even in the most difficult cases. More precisely, the purpose of the invention is to realize a device adapted to give rigid support to the tool inside the silo, for effectively breaking up blocks of material even when they are very compact and resistant.

Another purpose of the invention is to realize a device adapted to declogging of large storage silos.

Another purpose of the invention is that the device can also be used as a drill, when necessary, without having to dismantle the support structure anchored to the outside of the silo.

Further purposes are that the device is easy to use, also by one single operator, being completely controlled from the exterior of the silo with the additional possibility of camera monitoring.

The purposes are achieved by means of a declogging device for storage silos, comprising a support structure, which can be anchored to a silo, and a work arm extending from said structure and supporting at least one tool for removing blocks of aggregated and compacted material, characterised in that:
- said support structure comprises a rotating, vertically moving spindle to which said work arm is connected;
- said work arm comprises a first articulated tool-carrying portion, directly supporting said tool, comprising elements with hinge connections and actuator means;
- said work arm further comprises a second extension portion, comprising a selected number of rods connectable with substantially rigid couplings, said rods being inserted between said tool-carrying portion of the work arm and said spindle.

The main advantage of the invention is that the tool is rigidly supported by the work arm, instead of being suspended from a flexible element; therefore the tool can be accurately positioned and is firmly and stably supported with greater working efficiency.

Furthermore, the rigid work arm makes it possible to use more powerful and effective tools than known devices, wherein the tool is suspended from a flexible element such as a pneumatic tube. For example, the invention allows to use a hydraulic miller, removing the most compact and resistant clogging blocks.

The arm can be easily assembled on-site, and also inserted into the silo through a manhole thanks to the vertical movement of the spindle, enabling to assemble one by one the modular elements and the extension rods of the work arm, as it will appear more evident hereinbelow, with the help of an illustrative example. To facilitate the assembly and to provide a better stability, the structure is preferably of a gantry type, as in the following example.

A further advantage is that the modular structure of the work arm allows declogging of large silos, working on wide diameters and up to a depth of 50 metres or more.

Being provided with a motorized spindle, the device can also be used as a drill, replacing the tool-carrying articulated portion of the arm with a drill.

Advantages and features of the invention will be more evident from the description given below, referring to a preferred embodiment that is described only by way of a non limitative example, and with the help of the figures wherein:

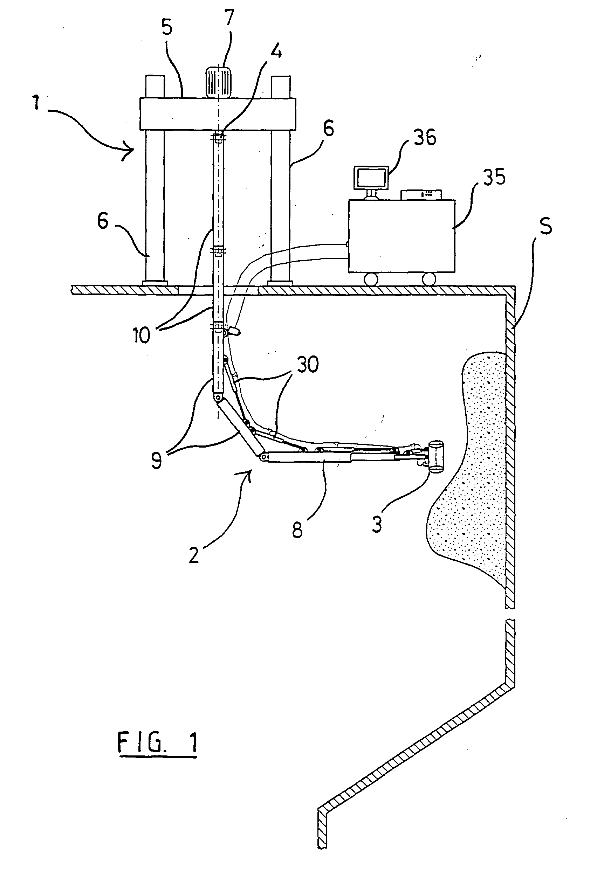

Fig. 1 is a schematical view of a device according to the invention, installed on the top of a silo for declogging of the same;
Fig. 2 shows the connection of the work arm of the device to the external support structure;
Fig. 3 is a detail of Fig. 1, showing the articulated portion of the work arm, carrying the working tool;
Fig. 4 shows one of the extension rods of the work arm of the device shown in Fig. 1;
Fig. 5 is a sectional view of the coupling between the extension rods which, in the shown embodiment, is basically identical to the fixing of the arm to the spindle;
Figs. 6a, 6b and 6c show schematically the sequence of operations for assembling the work arm of the device of Fig. 1.

Referring now to the details of the figures, the invention concerns a device for mechanically declogging a storage silo or hopper S, basically comprising a support structure 1 which can be anchored to the silo S, normally on the top of it, and a work arm 2 extending from said structure 1 into the silo S, supporting a tool 3 adapted to break up blocks of aggregated, compacted material.

Said work arm 2 is fixed to a spindle 4, rotating around a vertical axis and vertically sliding along the support structure 1.

More in detail, said work arm 2 comprises a first, articulated tool-carrying portion, directly supporting the tool 3, comprising modular elements with hinge connections and actuator means, and a second extension portion, comprising extension rods which can be inserted in a selected number between the tool-carrying articulated portion of the work arm itself, and the above spindle 4. The number of the extension rods 10 depends on the working depth to be reached by the tool 3.

Said actuator means of the tool-carrying portion of the work arm 2 are preferably hydraulic cylinders, disposed to move the end of said arm 2 rigidly supporting the tool 3.

In a preferred embodiment, the support structure 1 is a gantry-type structure, essentially comprising a horizontal platform 5 and lateral uprights 6, said spindle 4 being associated to the horizontal platform 5.

The horizontal platform 5 can move linearly in the vertical direction, causing the vertical movement of the spindle 4 attached to said platform. This movement is obtained, for example, with uprights 6 provided with slide guides for the platform 5 and hydraulic or electrical drive means, or with uprights 6 consisting of telescopic hydraulic cylinders. Further variants are clearly possible, according to known technique.

The spindle 4 is connected to motor means, supported by said platform 5 and advantageously comprising an electric motor 7 with a reduction gear.

The work arm 2 comprises a telescopic support 8 to which the tool 3 is associated; one or more modular elements 9, forming the articulated portion of said arm 2; a plurality of extension rods 10 forming the extension portion of said work arm 2. The length of this extension portion, that is the number of extension rods 10, depends on the depth to be reached by the tool 3.

Hinge connections between the modular elements 9 and the telescopic support 8 are realized through eyelets 11, provided with holes where pins 13 are inserted. Said pins 13 are advantageously pins with UNI EN 22341 type B heads.

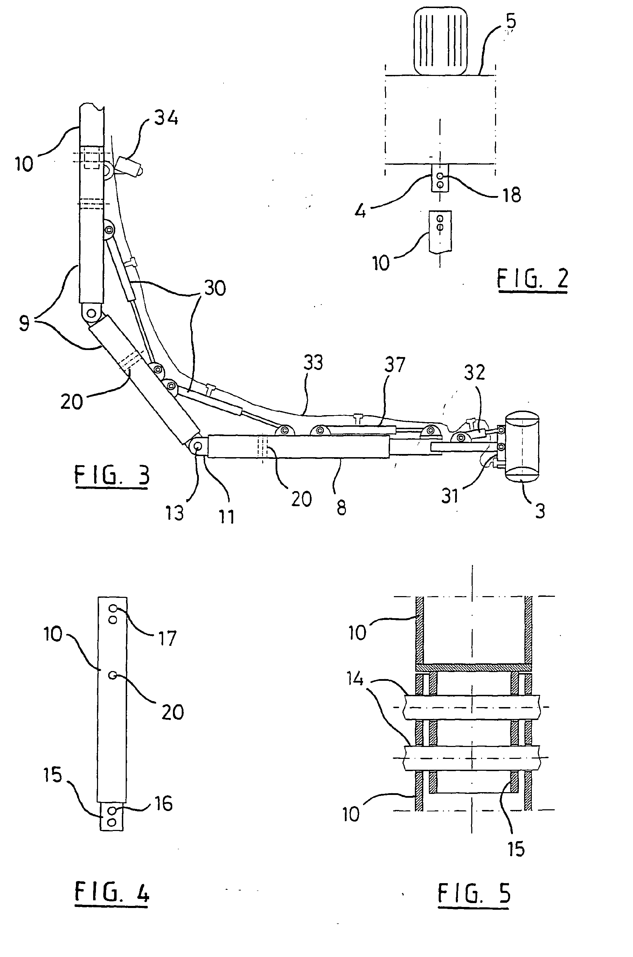

The extension rods 10 are advantageously hollow tubular elements, with one end fitted with a male extension 15, having a smaller diameter and holes 16, and the other end provided with holes 17 on the lateral surface, allowing a male-female connection as illustrated in Fig. 5, secured by pins 14. Two vertically aligned pins 14 are preferably used, for a substantially rigid connection.

The fixing to the spindle 4, as from Fig. 2, is similar to that of Fig. 5; holes 18 are provided on the spindle 4 for this purpose.

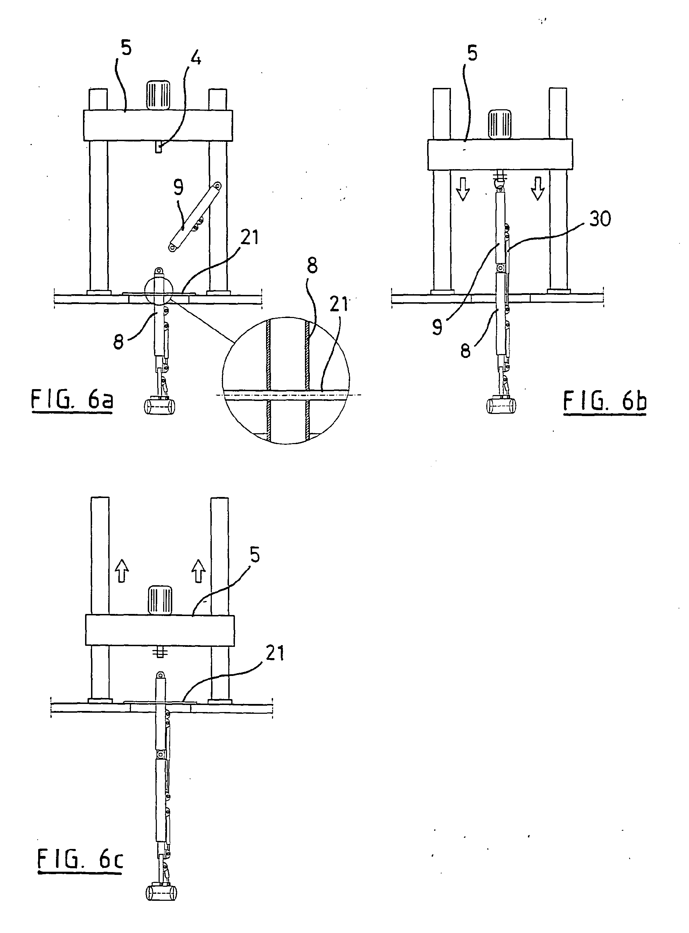

In addition, said modular elements 9, telescopic support 8 and extension rods 10 have at least a further, passing hole 20 which, during assembly, allows to hang the partially assembled arm to provisional means such as a rigid bar 21, as shown in Figs. 6a and 6c, thus permitting the connection of the further elements of the arm itself.

The elements composing the arm 2, in particular the extension rods 10, can be made simply and economically from steel tubes approximately 1 - 1.5 metres long; the maximum working depths normally required is reached with about twenty to thirty extension rods.

The articulated portion of the work arm 2 is provided with hydraulic actuators 30 for the movement of the arm itself; the tool 3 is advantageously connected to an articulated support 31, which is oriented by means of a further hydraulic actuator 32. Extension and retraction of the telescopic support 8 are powered by another hydraulic cylinder 37.

All the actuators are connected to a hydraulic line 33, preferably with quick release fittings of a known type. The tool 3 is preferably an hydraulic miller, connected to said hydraulic line 33.

A camera 34, facing the tool 3, is advantageously provided for monitoring the work, with a spotlight illuminating the working area.

The invention can also be used as a drill, connecting a plurality of extension rods 10 and a drill (not illustrated) of known type to the spindle 4. For this purpose, the motor means of the spindle 4 enable slow rotation of the spindle, for the positioning of the tool 3, or faster rotation for drilling.

The device also includes a control unit 35, with connections and hydraulic, electric or pneumatic drives depending on requirements, also providing a monitor 36 connected to the camera 34.

Materials may vary according to requirements; in particular the material of the tool 3 is chosen in relation to the product stored in the silo. In case of danger of explosion, the tool 3 in to be made of a non sparking material.

The device is used as follows. The operator first installs the support structure 1, fixing it to the silo S. Normally, when the silo S has a manhole at the top, the structure 1 is positioned over it.

The operator then assembles the work arm 2, connecting one after the other the modular elements of the arm and the extension rods 10. For this purpose, the operator can raise the partially assembled arm with the mobile platform 5, connecting the arm to the spindle 4; moreover, he can make use of the holes 20 to connect the bar 21, or other provisional means of suspension, to the partially assembled arm, as illustrated in Figs. 6a, 6b and 6c.

During assembly of the work arm 2, the operator also assembles the actuators, the connections for the oil circuit and other accessory devices that may be required.

The assembly of the device for use as a drill is done basically in the same way, assembling the drill and the required number of extension rods 10.

During the use, the tool 3 is positioned through rotation of the whole work arm 2 around its vertical axis, given by the spindle 4, and through the action of the above described hydraulic cylinders provided on the articulated too-carrying portion of the arm.

The working depth can be increased or decreased, during a working session, by adding or removing some of the extension rods 10.

The device is completely remote-controlled by the unit 35, from which it is also possible to check the work progress via the camera 34.

All the constructional details can be replaced with their technical equivalents, and the materials, shapes and dimensions can vary depending on requirements. It is also clear that the invention is adapted to declogging and removal of incrustations or blockages from silos, hoppers, storage tanks in general for any kind of granular or powdery products.

## Claims

1. A declogging device for storage silos, comprising a support structure (1), which can be anchored to a silo (S), and a work arm (2) extending from said structure (1) and supporting at least one tool
(3) for removing blocks of aggregated and compacted material, **characterised in that**:
- said support structure (1) comprises a rotating, vertically moving spindle (4) to which said work arm (2) is connected;
- said work arm (2) comprises a first articulated tool-carrying portion, directly supporting said tool (3), comprising elements (8, 9) with hinge connections and actuator means (30);
- said work arm (2) further comprises a second extension portion, comprising a selected number of rods (10) connectable with substantially rigid couplings, said rods (10) being inserted between said tool-carrying portion of the work arm (2) and said spindle (4).

2. A device according to claim 1, **characterised in that** said support structure (1) is a gantry structure comprising a horizontal platform (5) and lateral uprights (6), said horizontal platform (5) can move vertically and said spindle (4) is associated to said platform (5).

3. A device according to claim 2, **characterised in that** said lateral uprights (6) are sliding guides for the platform (5), and actuator means are provided to obtain the vertical movement of the platform itself.

4. A device according to claim 2, **characterised in that** said lateral uprights (6) are telescopic hydraulic cylinders.

5. A device according to claim 1, **characterised in that** said tool-carrying portion of the work arm (2) comprises a telescopic element (8) to which said tool (3) is associated.

6. A device according to claim 1, **characterised in that** said tool-carrying portion of the work arm (2) comprises an articulated support (31) for the tool (3), and said support (31) can be oriented by an actuator (32).

7. A device according to claim 1, **characterised in that** said elements (8, 9) with hinge connections of the work arm (2) are fitted with eyelets (11) for the insertion of connecting pins (13), for realizing said hinge connections.

8. A device according to claim 1, **characterised in that** said extension rods (10) have male-female couplings, secured with pins (14) inserted through corresponding holes (16, 17).

9. A device according to claim 1, **characterised in that** said elements (8, 9) with hinge connections and rods (10) of the work arm (2) comprise at least one hole (20) for hooking the partially assembled arm (2) to provisional means of suspension (21).

10. A device according to one or more of the preceding claims **characterised in that** said tool (3) is a hydraulic miller.
